# EUROPEAN PATENT APPLICATION

(11) **EP 4 760 830 A1**
(43) Date of publication of application: **17.06.2026**
(21) Application number: 24219450.4
(22) Date of filing: 12.12.2024
(51) Int. Cl.: H01M 8/2475

(54) **SYSTEM FOR ACCOMMODATING ELECTROCHEMICAL CELL STACKS**

(71) Applicant: AVL List GmbH, 8020 Graz (AT); Elcogen Oy, 01510 Vantaa (FI)
(72) Inventor: Kometter, Bernhard, 8111 Judendorf-Straßengel (AT); Feichtinger, Stefan, 8020 Graz (AT); Ylikorpi, Tomi, 01510 Vantaa (FI)
(74) Representative: Gamper, Bettina

(57) **Abstract**

The present invention relates to a system (100) for accommodating electrochemical cell stacks (10A, 10B) comprising a housing (20) and a compression system (30). According to the invention, a receptive element (13) separate from the housing (20), is arranged to an end of the at least one electrochemical cell stack (10A, 10B) and extending through a wall of the housing (20) for receiving the compression force exerted by compression system (30) and transmitting it on said end of the at least one electrochemical cell stack (10A, 10B), a gasket structure (42, 43) is arranged between the housing (20) and one of the end elements (11) of the at least one electrochemical cell stack (10A, 10B), wherein the receptive element (13) provides an adjustable clamping structure (12, 14, 15, 41; 17, 18, 19, 44) for providing compressive function for the gasket structure (42, 43) sealing the gas volume inside the housing (20) from the outside of the housing (20).

## Description

The present invention relates to a system for accommodating electrochemical cell stacks, including the arrangement and integrity of the stack for a reliable operation.

The system according to the invention is applicable in the technical fields of fuel cells or electrolyser cells, in particular large scale stationary systems.

Electrochemical cell stacks are operated at elevated temperatures. Depending on the type of cells, the operation temperature range may vary between 60 °C to 220 °C for common types of fuel cells having a proton exchange membrane (PEM), up to high temperatures around 300 - 1000 °C for solid oxide fuel cells (SOFC). It is known to provide a thermally insulated space for the operation of these electrochemical cells for improvement of a fuel cell system efficiency.

In addition, for beneficial design reasons, stacked electrochemical cells are held together and are compressed by threaded connections between stacked cell components. In other known stack designs, stacked cells are externally compressed by compression plates arranged to each end of the stack. Such compression plates are usually tightened together by tensioning means like spigots and threaded nuts extending along an out-side of the stack and through the compression plates. The applied compression is required to maintain many sealed interfaces between the stacked cell components free of leakages from fluid channels, running within the cell stack and passing through all stacked cells for the supply and exhaustion of gases as well as coolant.

In some cases, all the mechanical means required for compressing the stacked electrochemical cells are accommodated in a housing together with the cells and are exposed to the same operating temperatures. For high temperature types of fuel cells like SOFC, it is particularly beneficial, if an exposure of the mechanical means required for compressing the cell stack to the high operation temperatures can be avoided. For this reason, mechanical means for compressing high temperature types of fuel cells are usually arranged outside of a housing. However, in this case, a plurality of tensioning means or other sections of the compression system contacting the cell stack require a plurality of thermal and fluid tight seals in order to pass through the housing and to transmit the compression force on the cell stack inside the housing. In other words, potential thermal leaks or fluid leaks from an inside to an outside of the housing accommodating the cell stack need to be avoided for reasons of efficiency and safety.

It is an object of the invention to, at least partially, overcome the described problems in known cell stack designs. It is further an object of the invention to provide a technique that improves a fuel cell stack design with respect to either longtime secured fluid tightness, thermal insulation, a reduction of parts, and/or facilitated assembly.

The objects are solved by a system having the features of claim 1 or a method having the steps of claim 14. Further features and details of the invention result from the dependent claims, the specification, and the drawing.

The invention proposes a system for accommodating electrochemical cell stacks. The system comprises at least one electrochemical cell stack, a housing, a compression system and a receptive element. A plurality of electrochemical cells are stacked in a stacking direction, for energy conversion between chemical energy and an electrical energy. End elements are each arranged at one of opposite ends of the stack. The housing surrounds the at least one electrochemical cell stack, for thermally and fluidly separating an inside and an outside of the housing. The compression system has tensioning means mechanically connected to the end elements at the opposite ends of the at least one electrochemical cell stack, for applying a compression force on the electrochemical cells in the stacking direction.

According to the invention, a receptive element separate from the housing, is arranged to an end of the at least one electrochemical cell stack and extending through a wall of the housing, for receiving the compression force exerted by compression system and transmitting it through a wall of the housing on said end of the at least one electrochemical cell stack, a gasket structure is arranged between the housing and one of the end elements of the at least one electrochemical cell stack, wherein the receptive element provides an adjustable clamping structure for providing compressive function for the gasket structure sealing the gas volume inside the housing from the outside of the housing.

Hence, for the first time, the invention provides means to transmit an externally applied compression force through a housing wall on a cell stack internal to the housing, while sealing a region of force transmission through the wall of the housing. The sealing of the gas volumes inside and outside the housing provided by means of the gasket structure and the adjustable clamping structure according to the invention, achieves a measured leakage suppression performance at room temperature of around or less than 10 nano litres per minute per bar pressure difference (i.e. 10 nl / min /bar). The sealing function is made by tightening screws or other treaded means which then compress the gasket structure including a gasket ring and seal an interface between the housing and the end element that is on the top of the cell stack.

In the context of this disclosure and in terms of the invention, an electrochemical cell can be either a known type of fuel cell for producing electrical energy from a supply of a hydrogen rich fuel gas and an oxygen rich oxidation gas, or a known type of electrolyser cell for producing a hydrogen rich product gas and an oxygen rich product gas by splitting water under supply of electrical energy.

As a main advantage of the invention, the mechanical set up of the system according to the invention ensures a transmission of compression force on the stacked cells and all sealings in between. This reduces the probability of leaks within the stack.

A second advantage of the mechanics according to the invention is that the compression system is not exposed to high operation temperatures of the electrochemical cells inside the housing. Hence, mechanical properties and reliability of the components for generating a constant compression force are maintained and protected.

Furthermore, a third advantage of the invention is the avoidance of any leaks regarding a thermal loss or a potentially critical concentration of an explosive gas like hydrogen from an inside to an outside of the housing. Thus, the thermal efficiency as well as the safety of the system are not impaired by the transmission of force through the housing wall by the respective means according to the invention.

According to an advantageous further feature of the invention, the compression system and/or the receptive element comprise a defined surface formed in at least one of a spherical shape, half drum shape, elliptical shape, triangle shape, a point contact, and/or combination of these shapes at a region of compression contact, for disconnecting tilting moments from the compression force. Such shapes of contact surfaces avoid a transmission of a potential angular miss-alignment between the contact of the compression system and the receptive element. An angular miss-alignment can result from e.g. differently tightened tensioning means like spigots on opposite sides of the cell stack.

According to an advantageous further feature of the invention, the defined contact surface of the compression system is convex, and the defined contact surface of the receptive element is concave. The congruent pair of spherical contact surfaces ensures a secure transmission of compression force without a transmission of tilting moments.

According to an advantageous further feature of the invention, the system comprises a cover element having an opening accepting the receptive element, for covering, on the outside of the housing, a clearance of the receptive element within the opening of the housing. The cover element forms part of the adjustable clamping structure and prevents a thermal orfluid leakage of operation temperatures or gases inside the housing.

According to an advantageous further feature of the invention, the system comprises a fixation element having threaded means assigned to threaded bolts directed towards the cover element, for bringing free ends of the threaded bolts in a pressing contact against the cover element. The fixation element forms part of the adjustable clamping structure. In this way, the cover element is firmly pressed on the housing to compress the insulting layer to avoid thermal leakage, wherein there is preferably arranged a sealing element between the cover element and the housing.

According to an advantageous further feature of the invention, the fixation element is being supported by a locking element arranged to engage with at least one of a groove and a surface formed on the receptive element. The locking element forms part of the adjustable clamping structure and provides a counter bearing for the pressing force of the adjustable clamping structure.

According to an advantageous further feature of the invention, the fixation element, the locking element, and the receptive element are being formed as a one part. This enables an integral design of essential parts of the adjustable clamping structure including the receptive element.

According to an advantageous further feature of the invention, the locking element is split into two half-ring-shaped lock elements, and the fixation element has a circular groove accepting and enclosing the half-ring-shaped lock elements. This feature provides an easy assembling due to the form fitting engagement.

According to an advantageous further feature of the invention, the receptive element has recesses forming a wedge-shaped surface to an upper side of the recesses, and a pair of cover elements each having a semi-circular groove with a correspondingly inclined wedge surface on an upper side interacting with the recess, for pressing a lower side of the cover elements against the outside of the housing and covering a clearance of the receptive element within the opening of the housing. This feature provides an easy assembling due to the form fitting engagement among components as well as a reduced number of components.

According to an advantageous further feature of the invention, the cover elements are tightening to each other in wedge contact by threaded bolts accepted in corresponding threaded means in at least one of the cover elements. In this case, the adjustable clamping structure features a wedge surface contact for adjusting a pressing or clamping force on the gasket structure or housing by means of threaded bolts.

According to an advantageous further feature of the invention, wherein the at least one electrochemical cell stack includes a pair of substantially symmetrically arranged electrochemical cell stacks, wherein a piping for gas supply is arranged in the middle in between the pair of electrochemical cell stacks. The cell stacks are electrically isolated from any kind of gas supply arrangement. This so-called boxer design of stack arrangement allows for a thermally beneficial arrangement of preheated gas supply from an inner region of the housing in the sense of a hot box to the respective cell stacks. Hence such accommodation of cell stacks enhances the overall thermal efficiency.

According to an advantageous further feature of the invention, the at least one electrochemical cell stack is a solid oxide fuel cell stack operating. Particularly solid oxide type fuel cells operate in at least one of a fuel cell and electrolysis mode at above 300 °C temperature. Due to its high temperature difference between the inside and the outside of the housing, this type of fuel cell particularly benefits from technical advantages and thermal efficiency of the invention.

According to an advantageous further feature of the invention, the housing comprises internal liners extending through the housing in the stacking direction having open ends to the outside of the housing, for separating an open passage inside the liners from the inside of the housing; wherein each of the tensioning means extends through the open passage in one of the liners. This feature additionally enhances thermal separation between the inside and the outside of the housing.

Corresponding to the above-mentioned device-related aspects, the invention also provides accordingly a method for accommodating at least one electrochemical cell stack in a system, the system having a compression system with tensioning means mechanically connected to opposite ends of the at least one electrochemical cell stack, for applying a compression force on the electrochemical cells in the stacking direction (S). The method according to the invention comprises the steps of:
- providing a housing surrounding the at least one electrochemical cell stack, for thermally and fluidly separating an inside and an out-side of the housing;
- providing a receptive element separate from the housing, arranged to an end of the at least one electrochemical cell stack and ex-tending through a wall of the housing for receiving the compression force exerted by compression system and transmitting it on said end of the at least one electrochemical cell stack,
- providing a gasket structure arranged between the housing and an end element, and
   providing an adjustable clamping structure for providing compressive function for the gasket structure sealing the gas volume inside the housing from the outside of the housing.

Further objectives, advantages, features, and applications of the present invention arise from the following description of the exemplary embodiments with reference to the drawings. The drawing shows in:
- Fig. 1: a schematic representation of the system for accommodating a cell stack according to an embodiment of the invention;
- Fig. 2: a cross-section of an assembly of components in a region of the central introduction of compression force according to an embodiment of the invention;
- Fig. 3: a perspective view on a subset of components contained in Fig. 2 in an assembled arrangement and in a disassembled arrangement;
- Fig. 4: a cross-section of an assembly of components in the region of the central introduction of compression force according to another embodiment of the invention; and
- Fig. 5: a perspective view on a subset of components contained in Fig. 4 in an assembled arrangement and in a disassembled arrangement.

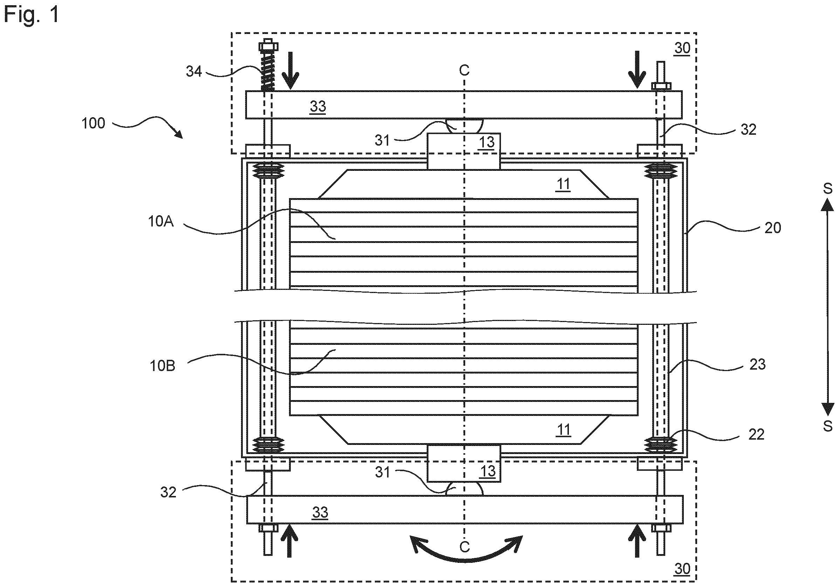

Fig. 1 schematically illustrates a system 100 for accommodating electrochemical cell stacks 10A, 10B for electrochemical conversion between chemical energy and electrical energy. In the present embodiment the electrochemical cells are solid-state fuel cells (SOFC) operated at high temperatures around 1000°C. Furthermore, in the present embodiment two electrochemical cell stacks 10A, 10B are symmetrically arranged from a middle section to an upper side and a lower side along a stacking direction S, wherein a piping for supplying gases for both electrochemical cell stacks 10A, 10B are arranged in said middle section (not depicted). This arrangement of cell stacks is called boxer design, in reminiscence to internal combustion engine design.

The electrochemical cell stacks 10A, 10B are arranged in a housing 20 having a thermal gasket layer 43 for thermally insulating an inside of the housing from an outside of the housing to maintain the high operation temperatures of the fuel cells and respective fluid flows requiring to be preheated or recirculated. The housing 20 includes internal liners 23 for insertion off the tensioning means 23 of a compression system 30. The internal liners 23 separate the inside of the housing 20 from an open passage within each of the liners 23 for preventing thermal leakage by the arrangement of tensioning means 23 passing through and reaching to the outside of the housing 20. The internal liners 23 comprise compensator elements 22 having a bellow-like structure providing a variable length for compensating mechanical tensions caused by differences in thermal expansions between materials or sections of the housing 20 and the respective internal liner 23.

The electrochemical cell stacks 10A, 10B are compressed at two opposite sides by the compression system 30. The compression system 30 includes two tensioning means 32 extending along the stacking direction S diametral to a central position C off the electrochemical cell stacks 10A, 10B and two transfer elements 33 extending between the tensioning means 32 on each of the opposite sides of the electrochemical cell stacks 10A, 10B. In other words, the transfer elements 33 are tensioned together in the stacking direction S by the two tensioning means 32 which pass through, or alternatively otherwise engage, at opposite sides of the transfer elements 33 arranged at the upper and lower end sides to the electrochemical cell stacks 10A, 10B. In addition, a compression spring 34 is arranged on one, alternatively on both tensioning means 32 for assisting to set up a predefined compression force from the respective tensioning means 32 on at least one side of the transfer element 33 towards the electrochemical cell stacks 10A, 10B.

In the middle of the transfer elements 33 a central compression section 31 is formed towards one of the ends of the electrochemical cell stacks 10A, 10B. The central compression section 31 transfers the tensioning forces applied by the tensioning means 32 on both sides of the transfer elements 33 into a centrally exerted compression force on the end of the electrochemical cell stacks 10A, 10B. The central compression force results in a sum of the individual tensioning forces. A contact surface of the central compression section 31 partially has a defined surface shape D, in this case a convex spherical shape, i.e. a ball-shape. The central compression sections 31 exert a pressing contact via the defined surface shape D onto respectively assigned receptive elements 13 preferably also having a defined surface shape D, in this case a congruently concave spherical shaped contact surface for receiving the compression force on the stack side. The receptive elements 13 are arranged in the central position C of the electrochemical cell stacks 10A, 10B fixed to an end element 11 arranged on the upper and lower side of the electrochemical cell stacks 10A, 10B. The end element 11 further supports the even distribution of force across the electrochemical cell stacks 10A, 10B and has also an electrical isolation function.

The convex spherical contact surface D on the central compression section 31 and the concave spherical contact surface D on the receptive element 13 act like a ball-joint under axial load, meaning that the provided degrees of freedom disconnect any tilting moments that could result from differences in tensioning forces caused by a different tightening among the individual tensioning means 32 and which will not be transmitted by the centrally exerted compression force onto the ends of the electrochemical cell stacks 10A, 10B. As a result, the transmitted compression force is evenly distributed across the cell planes and sealings stacked in between, independent of differences in tightening the tensioning means 32 up to a reasonable extend. For the same reason, it is effective and sufficient to employ only one single compression spring 34 influencing forces on only one side of the transfer elements 33, for assisting the set up and adjustment of the overall compression from the compression system 30 onto the electrochemical cell stacks 10A, 10B. The compression spring can for example be a coil spring or a cup spring.

In a modification to the shown embodiment of the system 100, more than the only one centrally arranged receptive element 13, e.g. two or three receptive elements 13 can be provided on each side of the at least one electrochemical cell stack 10A, 10B, interacting together with two or three corresponding compression sections 31 provided on the transfer element 33, for exerting on multiple points the compression force from the compression system 30 through the wall of the housing 20 onto an end of the at least one electrochemical cell stack 10A, 10B.

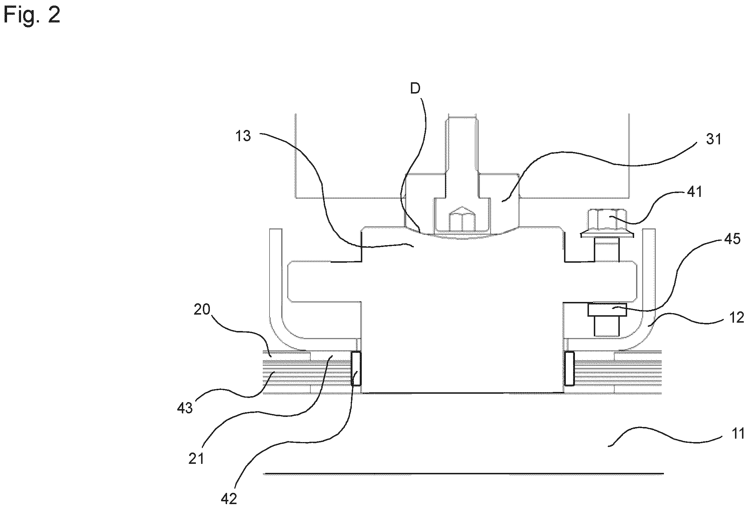

Fig. 2 shows a closer focus on a cross-section of one embodiment of an assembly including the receptive element 13 that passes through the housing 20 for transmitting the compression force from the compression force 30 on the outside of the housing 20 to the electrochemical cell stacks 10A, 10B on the inside of the housing 20. As described in the following, said assembly includes means for supporting a thermal insulation of the high operation temperatures inside the housing 20 in purpose of improved thermal efficiency of the system 100.

The central compression section 31 is fixed to the above arranged transfer element 33 of the compression system 30, with the convex spherical contact surface D directed towards with the concave spherical contact surface D of the receptive element 13 which is fixed to the end element 11 of the upper end side of the electrochemical cell stack 10A. The receptive element 13 extends through an opening 21 formed in the housing 20. A gasket layer 43 serves as a sealing which prevents thermal leakage and leakage of fluids and/or mediums like hydrogen from an inside to an outside of the housing 20. Further a thermal leakage or fluid leakage across a clearance between the perimeters of the receptive element 13 and the opening 21 of the housing 20 is prevented by a gasket ring 42. Above said clearance, i.e. on an outside of the housing 20, a cover element 12 is arranged and pressed against the outer surface of the housing 20 in order to compress the gasket layer 43 and hold it place together with the gasket ring 42. The cover element 12 has an opening for accepting the passing through receptive element 13 with a close clearance.

A ring-shaped flange portion of the receptive element 13 has bores arranged around a center of the receptive element 13 above the cover element 12. Threaded bolts 41 assigned to the bores and respective threaded means 45 are directed downwards, to press, by its free ends, the cover element 12 against the housing 20 while being tightened. The treaded means 45 represents any kind of counter-thread for the bolt 41 which might be provided in the form of a nut or a thread cut into the bore of the receptive element 13. In this way an adjustable clamping structure is formed on the receptive element 13 for compressing the gasket structure of the gasket ring 42 and the gasket layer 43 for avoiding thermal and liquid leakage out of the housing 20.

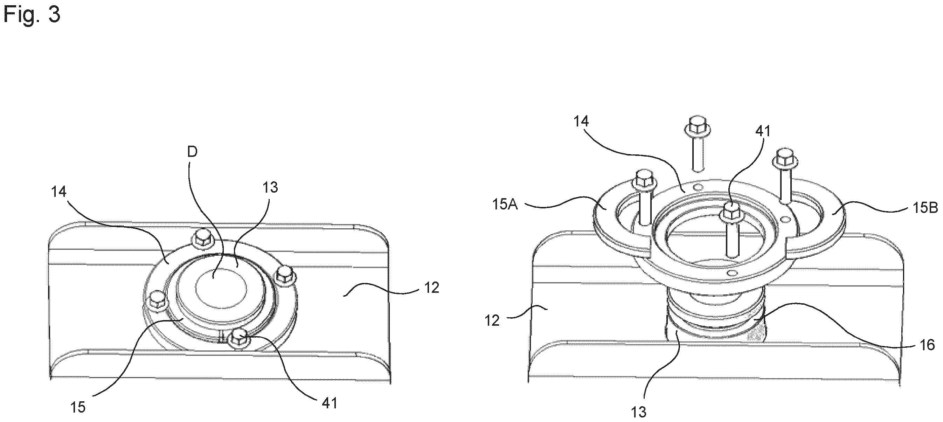

Fig. 2 shows an integral design of several parts of the adjustable clamping structure, wherein the receptive element 13 has a flange portion including said bores is formed on an outer perimeter. In an alternative modification of this embodiment, the integrally formed flange portion of the receptive element 13 is realized by separate parts engaging into each other. In this case, the flange portion is formed by a ring shaped, separate fixation element 14 which is secured in an upwards direction by a lock element 15A, 15B. The lock element 15A, 15B engages with a groove 16 recessed in the perimeter of the receptive element 13. Such modification will become clear with reference to Fig. 3.

As can be seen in a perspective view of Fig. 3 in a disassembled arrangement depicted on the right-hand side, in this embodiment, the lock element is comprised of two half-ring-shaped elements 15A and 15B that are inserted from opposite sides into the groove 16 of the receptive element 13. The fixation element 14 has a circular recess for enclosing and securing the two half-ring-shaped elements 15A and 15B in the groove 16. On the left-hand side, in the assembled arrangement, the upper end of the receptive element 13 exposes the concave spherical contact surface to the outside of the housing 20 for receiving the centrally exerted compression force by the compression system 30. As mentioned before, in a modification of this embodiment, the receptive element 13, the fixation element 14 and the lock element 15 or its two half-ring-shaped elements 15A and 15B are integrally formed as one mutual component. In another modification of this embodiment, the receptive element 13 and the end element 11 of the cell stacks 10A, 10B are integrally formed as one mutual component.

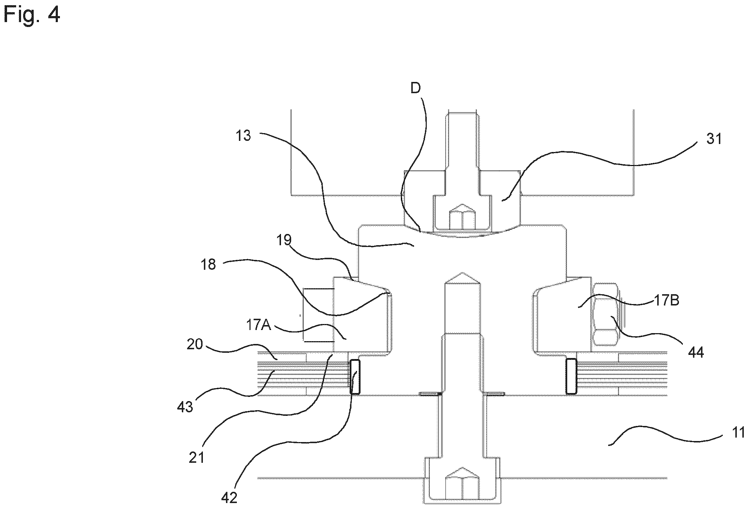

Fig. 4 shows a cross-section of another embodiment of an assembly including the receptive element 13 passing through the housing 20. In this embodiment, the function and basic shape of the central compression section 31, the receptive element 13, the housing 20 including the opening 21 and gasket layer 43 correspond to the preceding embodiment shown in Fig. 2 and Fig. 3. The embodiment shown in Fig. 4 substantially differs in components and shapes with respect to the functionality of covering, from the outside, the clearance between the perimeters of the receptive element 13 and the opening 21 of the housing.

Two substantially symmetrically formed cover elements 17A and 17B are attached to the receptive element 13 which provides recesses on opposite sides or preferably one recess 18 extending around the perimeter of the receptive element 13 for inserting both cover elements 17A and 17B. The recess 18 forms on the upper inside a wedge surface interacting with semi-circular wedge surfaces 19 of both cover elements 17A and 17B. When tightening the cover elements 17A and 17B together by means of threaded bolts 44, a lower surface of the cover elements 17A and 17B is pressed downwards against the outer surface of the housing 20 for covering said clearance between the perimeters of the receptive element 13 and the opening 21 from the outside.

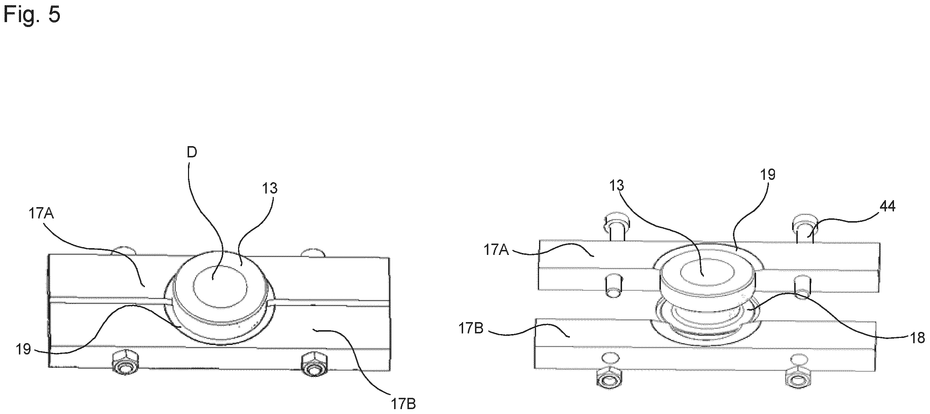

Fig. 5 illustrates a perspective view of an assembled and a disassembled arrangement of the embodiment shown in Fig. 4. As can be seen on the right-hand side, only the two cover elements 17A and 17B need to be inserted to the recess 18 in the receptive element 13 followed by a step of tightening the cover elements 17A and 17B together by means of the threaded bolts 44. Comparable to the preceding embodiment, in the assembled arrangement depicted on the left-hand side, the upper end of the receptive element 13 exposes the concave spherical contact surface to the outside of the housing 20 for receiving the centrally exerted compression force by the compression system 30. In a modification of this embodiment, the receptive element 13 and the end element 11 of the cell stacks 10A, 10B are integrally formed as one mutual component. The foregoing explanations of the embodiments describe the present invention solely by way of examples. Of course, individual features of the embodiments can be freely combined with one another, provided this is technically expedient, without departing from the scope of the present invention.

### List of reference signs

- 10A: electrochemical cell stack
- 10B: electrochemical cell stack
- 11: end element of cell stack
- 12: cover element
- 13: receptive element
- 14: fixation element
- 15: locking element
- 15A: half-ring shaped locking element
- 15B: half-ring shaped locking element
- 16: groove in receptive element
- 17A: cover element
- 17B: cover element
- 18: recess with wedge surface in receptive element
- 19: semi-circular groove with wedge surface in cover element
- 20: housing
- 21: opening in housing
- 22: compensator element
- 23: internal liners
- 30: compression system
- 31: central compression section
- 32: tensioning means
- 33: transfer element
- 34: compression spring
- 41: fixation means / threaded bolt
- 42: gasket ring
- 43: gasket layer
- 44: threaded bolt
- 45: threaded means
- 100: System for cell stack accommodation
- C: central position
- S: stacking direction
- D: defined surface

## Claims

1. System (100) for accommodating electrochemical cell stacks (10A, 10B), comprising:
at least one electrochemical cell stack (10A, 10B) having a plurality of electrochemical cells stacked in a stacking direction (S), for energy conversion between chemical energy and an electrical energy, and end elements (11) each arranged at one of opposite ends;
a housing (20) surrounding the at least one electrochemical cell stack (10A, 10B), for thermally and fluidly separating an inside and an outside of the housing (20); and
**characterized in that** the system (100) comprises:
a compression system (30) having tensioning means (32) mechanically connected to the end elements (11) at the opposite ends of the at least one electrochemical cell stack (10A, 10B), for applying a compression force on the electrochemical cells in the stacking direction (S); and
a receptive element (13) separate from the housing (20), arranged to an end of the at least one electrochemical cell stack (10A, 10B) and extending through a wall of the housing (20) for receiving the compression force exerted by compression system (30) and transmitting it through the wall of the housing (20) on said end of the at least one electrochemical cell stack (10A, 10B),
a gasket structure (42, 43) arranged between the housing (20) and one of the end elements (11) of the at least one electrochemical cell stack (10A, 10B), wherein
the receptive element (13) provides an adjustable clamping structure (12, 14, 15, 41; 17, 18, 19, 44) for providing compressive function for the gasket structure (42, 43) sealing the gas volume inside the housing (20) from the outside of the housing (20).

2. System (100) according to claim 1, wherein at least one of the compression system (30) and the receptive element (13) comprise a defined surface (D) formed in at least one of a spherical shape, half drum shape, elliptical shape, triangle shape, a point contact, and combination of these shapes at a region of compression contact for disconnecting tilting moments from the compression force.

3. System (100) according to claim 2, wherein the defined contact surface (D) of the compression system (30) is convex, and the defined contact surface (D) of the receptive element (13) is concave.

4. System (100) according to any of the preceding claims, further comprising a cover element (12) having an opening accepting the receptive element (13), for covering, on the outside of the housing (20), a clearance of the receptive element (13) within the opening (21) of the housing (20).

5. System (100) according to claim 4, further comprising a fixation element (14) having threaded means (45) assigned to threaded bolts (41) directed towards the cover element (12), for bringing free ends of the threaded bolts (41) in a pressing contact against the cover element (12).

6. System (100) according to claim 5, wherein the fixation element (14) is being supported by a locking element (15) arranged to engage with at least one of a groove (16) and a surface formed on the receptive element (13).

7. System (100) according to claim 6, wherein the fixation element (14), the locking element (15), and the receptive element (13) are being formed as a one part.

8. System (100) according to claim 6, wherein the locking element (15) is being split into half-ring-shaped locking elements (15A, 15B), and the fixation element (14) has a circular groove accepting and enclosing the half-ring-shaped locking elements (15A, 15B).

9. System (100) according to any of the preceding claims, wherein the receptive element (13) has recesses (18) at least on opposite sides forming a wedge-shaped surface to an upper side of the recesses (18), and a pair of cover elements (17A, 17B) each having a groove (19) with a correspondingly inclined wedge surface on an upper side engages with the recesses (18), for pressing a lower side of the cover elements (17A, 17B) against the the outside of the housing (20) and covering a clearance of the receptive element (13) within the opening (21) of the housing (20).

10. System (100) according to claim 9, wherein the cover elements (17A, 17B) are tightening to each other in wedge contact by threaded bolts (44) accepted in corresponding threaded means in at least one of the cover elements (17A, 17B).

11. System (100) according to any of the preceding claims, wherein the at least one electrochemical cell stack (10A, 10B) includes a pair of substantially symmetrically arranged electrochemical cell stacks (10A, 10B), wherein a piping for gas supply is arranged in the middle in between the pair of electrochemical cell stacks (10A, 10B)

12. System (100) according to any of the preceding claims, wherein the at least one electrochemical cell stack (10A, 10B) is a solid oxide cell stack operating at high temperatures.

13. System (100) according to any of the preceding claims, wherein the housing (20) comprises internal liners (23) extending through the housing (23) in the stacking direction (S) having open ends to the outside of the housing (20), for separating an open passage inside the liners (23) from the inside of the housing (20); wherein each of the tensioning means (32) extends through the open passage in one of the liners (23).

14. Method for accommodating at least one electrochemical cell stack (10A, 10B) in a system (100), the system (100) having
a compression system (30) with tensioning means (32) mechanically connected to opposite ends of the at least one electrochemical cell stack (10A, 10B), for applying a compression force on the electrochemical cells in the stacking direction (S),
the method comprising the steps of:
- providing a housing (20) surrounding the at least one electrochemical cell stack (10A, 10B), for thermally and fluidly separating an inside and an outside of the housing (20);
**characterized by**
- providing a receptive element (13) separate from the housing (20), arranged to an end of the at least one electrochemical cell stack (10A, 10B) and extending through a wall of the housing (20) for receiving the compression force exerted by compression system (30) and transmitting it on said end of the at least one electrochemical cell stack (10A, 10B),
- providing a gasket structure (42, 43) arranged between the housing (20) and the end element (11), and
providing an adjustable clamping structure (12, 14, 15, 41; 17, 18, 19, 44) for providing compressive function for the gasket structure (42, 43) sealing the gas volume inside the housing (20) from the outside of the housing (20).
